# EUROPÄISCHE PATENTSCHRIFT

(11) **EP 1 519 145 B1**
(45) Veröffentlichungstag und Bekanntmachung des Hinweises auf die Patenterteilung: **10.10.2007**
(21) Anmeldenummer: 04104009.8
(22) Anmeldetag: 20.08.2004
(51) Int. Cl.: G01C 9/28, G01P 1/02

(54) **Anordnung mit einem Sensor**
Arrangement with a sensor
Ensemble capteur

(30) Priorität: 29.09.2003 DE 10345632
(43) Veröffentlichungstag der Anmeldung: 30.03.2005
(73) Patentinhaber: SIEMENS AKTIENGESELLSCHAFT, 80333 München (DE)
(72) Erfinder: Kolar, Anton, 78052, Villingen-Schwenningen (DE); Rottler, Josef, 78126, Königsfeld (DE)

(56) Entgegenhaltungen:
- WO-A-03/008244
- DE-A- 19 720 106
- US-B1- 6 215 672

## Beschreibung

Die Erfindung betrifft eine Anordnung mit einem Sensor zur Messung einer Position, insbesondere einer Winkellage, Bewegung oder Beschleunigung, nach dem Oberbegriff des Anspruchs 1.

Überall dort, wo die aufzunehmende Messgröße an dem Ort des mit weiteren elektronischen Bauelementen bestückten Leiterträgers messbar ist, kommt obige Anordnung regelmäßig zur Anwendung. Eine der häufigsten Anwendungen findet sich in der Kraftfahrzeugtechnik, wo regelmäßig Sensoren zur Bestimmung der Winkellage, der Beschleunigung oder des Bewegungszustandes auf Leiterträgern oder Leiterplatten angebracht werden. Die Bauraumverhältnisse bedingen hier bisweilen eine schräge Anordnung des Leiterträgers bzw. der Leiterplatte. Viele der oben genannten Sensoren benötigen jedoch für eine einwandfreie Funktion eine senkrechte Einbaulage bzw. weisen eine Referenzachse auf, welche bei Nullpunktsbedingungen der Messung parallel zur Erdbeschleunigung verlaufen sollte. Daher ist es notwendig, die Sensoren zur korrekten Ausrichtung der Referenzachse schräg zu dem Leiterträger anzuordnen und an diesem zu befestigen. Herkömmliche Anordnungen sehen hierzu eine separate Leiterplatte für den entsprechenden Sensor vor, der mittels Kabeln und Stecker in elektrischer Verbindung mit dem Basis-Leiterträger steht. Zusätzlich müssen Vorkehrungen getroffen werden, die eine hinreichende Halterung der kleinen Leiterplatte gewährleisten. Daher geht ein Schrägeinbau eines Leiterträgers, der mit einem Sensor obiger Art in Verbindung steht, stets mit erhöhten Kosten einher.

Aus der WO 03/008244 A1 ist dazu ein in einem elektronischen Steuergerät eingebauter Bewegungssensor bekannt, der auf einer keilförmigen Halterung befestigt und mit einer Leiterplatte verbunden ist. Die Halterung ist so ausgestaltet, dass der Bewegungssensor relativ zu den Fahrzeugachsen ausgerichtet ist.

Der Erfindung liegt die Aufgabe zugrunde, eine Anordnung anzugeben, bei der Sensoren bisher handelsüblicher Bauart in Kombination mit dem Formstück eingesetzt werden können, wobei die Anordnung möglichst kostengünstig ist.

Erfindungsgemäß wird die Aufgabe mittels einer Anordnung mit den Merkmalen des Anspruchs 1 gelöst.

Das Formstück weist an den Positionen, die den elektrisch leitenden Kontakten an dem Anlagebereich des Sensors gegenüberliegen, Ausnehmungen auf, in welche die Kontakte einführbar sind und die sich von der ersten Anlagefläche durchgehend bis zur zweiten Anlagefläche erstrecken. Auf diese Weise ist einerseits die Möglichkeit der elektrischen Kontaktierung des Sensors gegeben und andererseits der Bereich der elektrischen Kontaktierung mittels des Formstückes gegenüber Einflüssen von Außen geschützt.

Häufig kommt es vor, dass der Winkel der Schrägstellung des Leiterträgers so groß ist, dass die Länge der Kontakte des Sensors für eine elektrische Verbindung mit Leitungen des Leiterträgers zumindest in manchen Teilen des Anlagebereiches nicht mehr ausreichend ist, da das Formstück an diesen Positionen eine zu große Keildicke aufweist. Hier sieht die Erfindung vor, dass die entsprechenden Kontakte in den Ausnehmungen mittels einer elektrisch leitenden Metallhülse in Richtung des Leiterträgers verlängert werden und auf diese Weise mittels der Metallhülse eine elektrisch leitende Verbindung zwischen den Kontakten des Sensors und den Leitungen des Leiterträgers hergestellt wird.

Die schräge Ausrichtung im Raum bedeutet bei der erfindungsgemäßen Anordnung, dass der Leiterträger einen Winkel mit der Horizontalen einschließt, der ungleich Null ist. Das Wesen der Ebenheit der Anlageflächen liegt darin, dass die Anlageflächen zwar Vorsprünge zum Zentrieren oder Befestigen, insbesondere zum Verrasten des Formstückes an benachbarten Bauteilen aufweisen können, jedoch mindestens eine ebene Fläche vorgesehen ist, die an einem benachbarten Bauteil, insbesondere dem Sensor oder dem Leiterträger, anliegt. Die Referenzachse des Sensors kann eine Achse sein, welche bei Nullmessung des Sensors vorzugsweise in Richtung der Erdbeschleunigung weist, damit im gesamten Messbereich optimale Messergebnisse erzielt werden können.

Ein Vorteil der Anordnung liegt auch darin, dass eine zusätzliche Leiterplatte für den Sensor eingespart wird und gleichzeitig eine Befestigung für den Sensor auf dem Leiterträger bereitgestellt ist. Darüber hinaus bildet der Sensor mit dem Leiterträger ein kompaktes Modul, was die Montage und Befestigung in dem Kraftfahrzeug vereinfacht. Ein typischer Anwendungsfall der Erfindung liegt in der Befestigung eines Sensors zur Winkelmessung, welcher häufig auch als Gyrometer bezeichnet wird und der regelmäßig eine horizontale Einbaulage in Hinblick auf seine Anlagefläche, aus der Kontaktstifte hervorstehen, benötigt.

Eine zweckmäßig Weiterbildung der Erfindung sieht vor, dass das Formstück mindestens einen federnden Rasthaken an der ersten Anlagefläche aufweist, und der Leiterträger eine mit dem Rasthaken korrespondierende Ausnehmung aufweist, durch welche der Rasthaken zumindest teilweise hindurchführbar ist und an welcher der Rasthaken einrastbar ist. Eine noch bessere Stabilität der Verbindung des Formstückes mit dem Leiterträger ergibt sich, wenn an dem Formstück mindestens zwei mit dem Leiterträger verrastbare Rasthaken vorgesehen sind. In gleicher Weise zweckmäßig ist eine federnde Rastverbindung des Formstückes zur Anbringung an dem Sensor. Dies kann beispielsweise mittels mindestens eines widerhakenförmigen Vorsprungs an dem Sensor und mindestens einer mit dem Vorsprung korrespondierenden federnden Ausnehmung an dem Formstück realisiert werden.

Kostengünstig können die regelmäßig als zylindrische Stifte ausgebildeten Kontakte bei Bedarf mittels einer handelsüblichen Adernendhülse zwecks Verlängerung in Richtung des Leiterträgers versehen werden.

Zweckmäßig können bei Bedarf die Kontakte des Sensors mittels einer Lötung mit einer Metallhülse verlängernd verbunden werden, und von besonderem Vorteil ist es hierbei, die Kontakte, die Metallhülse und entsprechende Leitungen auf dem Leiterträger in einem Schritt miteinander zu verlöten. Bei gesteigerten Anforderungen an die Festigkeit dieser Verbindung ist eine Schweißung bei der Verbindung der Metallhülse mit den Kontakten des Sensors vorzuziehen, wobei eine Laserschweißung besonders zweckmäßig ist.

Großartige Kostenvorteile und eine zusätzlich zweckmäßig Isolation der Kontakte ergeben sich, wenn das Formstück als Kunststoffspritzgussbauteil ausgebildet ist.

Im Folgenden ist die Erfindung anhand eines speziellen Ausführungsbeispiels zur Verdeutlichung ohne Einschränkung auf dieses Beispiel unter Bezugnahme auf Zeichnungen näher beschrieben. Es zeigen:
- Figur 1: eine schematische, perspektivische Darstellung eines Sensors, eines erfindungsgemäßen Formstückes und eines Leiterträgers und
- Figur 2: eine teilweise geschnittene Darstellung der Anordnung aus Figur 1.

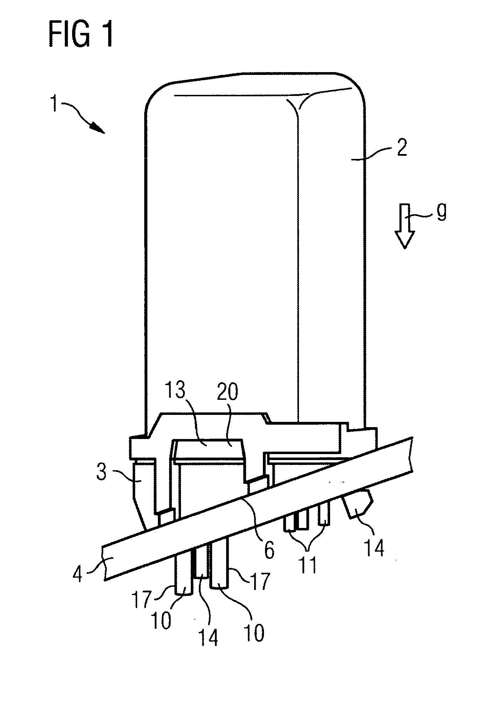

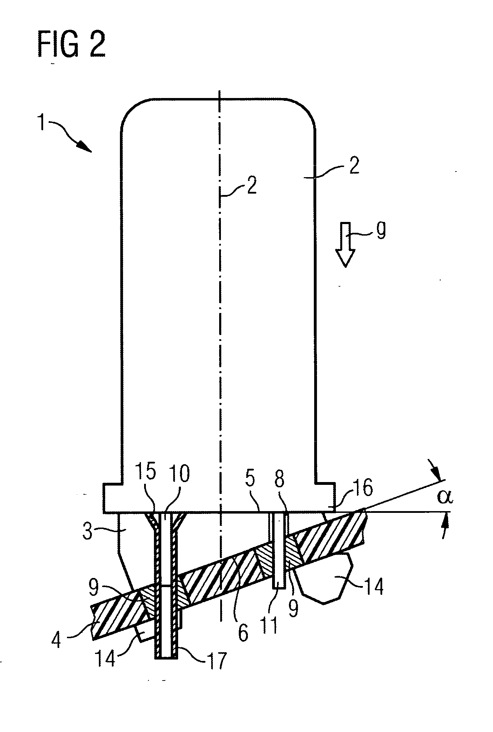

Im Folgenden nimmt die Beschreibung Bezug auf die in Figur 1 und Figur 2 dargestellte identische Anordnung 1. Die Anordnung 1 besteht im Wesentlichen aus einem Sensor 2, einem Formstück 3 und einem Leiterträger 4, wobei das Formstück 3 sich zwischen dem Sensor 2 und dem Leiterträger 4 befindet. Das Formstück 3 ist keilförmig ausgebildet, wobei eine erste Anlagefläche 5 einen Keilwinkel α mit einer zweiten Anlagefläche 6 einschließt. Der Leiterträger 4 ist schräg im Raum angeordnet und schließt mit der Horizontalen ebenfalls den Keilwinkel α ein, so dass er einen Winkel zur Vertikalen von 90° - α bildet. Der der Winkelmessung dienende Sensor 2 weist eine Referenzachse 7 auf, die gemäß einer technischen Spezifikation des Sensors 2 bei Nullpunktsmessungsbedingungen in Richtung der Erdbeschleunigung g weisen sollte, damit optimale Messergebnisse über den gesamten Messbereich erzielt werden können. Dem Leiterträger 4 zugewandt weist der Sensor 2 einen Anlagenbereich 8 auf, der im zusammengefügten Zustand der Anordnung 1 an der ersten Anlagefläche 5 des Formstückes 3 anliegt. Die zweite Anlagefläche 6 des Formstückes 3 liegt direkt auf dem Leiterträger 4 auf. Der Sensor 2 steht mit nicht dargestellten Leitungen des Leiterträgers 4 mittels Kontakten 10, 11 in elektrisch leitender Verbindung 9.

Der Sensor ist mittels einer Rastverbindung 13 an dem Formstück 3 befestigt, und das Formstück 3 ist mittels Rasthaken 14 an dem Leiterträger 4 angebracht. Das Formstück 3 weist an den Positionen, die den Kontakten 10, 11 des Sensors 2 beim Zusammenfügen gegenüberliegen, Ausnehmungen 15, 16 auf, in welche die Kontakte 10, 11 bei der Montage einführbar sind und die sich von der ersten Anlagefläche 5 durchgehend bis zur zweiten Anlagefläche 6 erstrecken. Auf Grund der Keilform des Formstückes 3 sind die Ausnehmungen 15, 16 von unterschiedlich langer Längserstreckung, so dass die Kontakte 10, 11 handelsüblicher Sensoren 2 bei entsprechendem Keilwinkel α für eine elektrische Kontaktierung an Leitungen des Leiterträgers 4 nicht lang genug sind. Hier ist erfindungsgemäß eine elektrisch leitende Metallhülse 17 an den Kontakten 10 angebracht, welche die Kontakte 10 in Richtung des Leiterträgers 4 zum Zwecke der elektrischen Kontaktierung verlängert.

## Patentansprüche

1. Anordnung (1) mit
- einem Sensor (2) zur Messung einer Position, insbesondere einer Winkellage, Bewegung oder Beschleunigung,
- einem Leiterträger (4), an welchem der Sensor (2) befestigt ist, und
- elektrischen Verbindungen (9), mittels denen der Sensor (2) an Leitungen des Leiterträgers (4) elektrisch kontaktiert ist, wobei
- der Leiterträger (4) schräg im Raum ausgerichtet ist,
- zwischen dem Sensor (2) und dem Leiterträger (4) ein keilförmiges Formstück (3) angeordnet ist, welches zwei gegenüberliegende und einen Keilwinkel (α) miteinander einschließende, im Wesentlichen ebene Anlageflächen (5, 6) aufweist, wobei
- eine zweite Anlagefläche (6) an dem Leiterträger (4) anliegt und eine erste Anlagefläche (5) an einem Anlagebereich (8) des Sensors (2) anliegt,
- der Keilwinkel (α) so gewählt ist, dass eine Referenzachse (7) des Sensors (2) sich bei Nullmessung des Sensors im Wesentlichen in Erdbeschleunigungsrichtung (g) ersteckt,
- der Sensor (2) elektrisch leitende Kontakte (10, 11) aufweist, welche in dem Anlagebereich (8) hervorstehen, **dadurch gekennzeichnet**
- **dass** das Formstück (3) an den Positionen, die den Kontakten (10, 11) beim Zusammenfügen gegenüberliegen, Ausnehmungen (15, 16) aufweist, in welche die Kontakte (10, 11) einführbar sind und die sich von der ersten Anlagefläche (5) durchgehend bis zur zweiten Anlagefläche (6) erstrecken und
- **dass** mindestens in einer der Ausnehmungen (15, 16) eine elektrisch leitende Metallhülse (17) angeordnet ist, welche mit dem Kontakt (10) in der Ausnehmung (15, 16) und mindestens einer Leitung des Leiterträgers (4) elektrisch leitend verbunden ist.

2. Anordnung (1) nach Anspruch 1, **dadurch gekennzeichnet, dass** es sich bei dem Sensor (2) um einen Winkelmessungssensor handelt.

3. Anordnung (1) nach mindestens einem der vorhergehenden Ansprüche, **dadurch gekennzeichnet, dass** das Formstück (3) mindestens einen federnden Rasthaken (14) an der zweiten Anlagefläche (6) aufweist und der Leiterträger (4) eine mit dem Rasthaken (14) korrespondierende Öffnung (20), durch welche der Rasthaken (14) zumindest teilweise hindurchführbar ist und an welcher der Rasthaken (14) einrastbar ist.

4. Anordnung (1) nach mindestens einem der vorhergehenden Ansprüche, **dadurch gekennzeichnet, dass** der Sensor (2) an dem Formstück (3) mittels einer federnden Rastverbindung (13) anbringbar ist.

5. Anordnung (1) nach mindestens einem der vorhergehenden Ansprüche, **dadurch gekennzeichnet, dass** mindestens ein Kontakt (10, 11) als zylindrischer Stift ausgebildet ist, welcher zumindest teilweise von der Metallhülse (17) umgeben ist.

6. Anordnung (1) nach Anspruch 5, **dadurch gekennzeichnet, dass** die Metallhülse (17) länger ist als der Kontakt (10) und den Kontakt (10) in seiner Längserstreckung verlängert.

7. Anordnung (1) nach mindestens einem der vorhergehenden Ansprüche 5 oder 6, **dadurch gekennzeichnet, dass** es sich bei der leitenden Metallhülse (17) um eine Adernendhülse handelt.

8. Anordnung (1) nach mindestens einem der vorhergehenden Ansprüche 5 bis 7, **dadurch gekennzeichnet, dass** die Ausnehmungen (15, 16) sich an Positionen unterschiedlicher Keildicke des keilförmigen Formstückes (3) befinden und in mindestens einer Ausnehmung (15, 16), welche in ihrer Längserstreckung länger ist als der darin befindliche Kontakt (10) eine Metallhülse (17) angeordnet ist, die den Kontakt (10) in Richtung des Leiterträgers (4) verlängert.

9. Anordnung (1) nach mindestens einem der vorhergehenden Ansprüche, **dadurch gekennzeichnet, dass** das Formstück (3) als Kunststoffspritzgussbauteil ausgebildet ist.

## Claims

1. Arrangement (1) with
- a sensor (2) for measuring a position, in particular an angular position, movement or acceleration,
- a conductor support (4) to which the sensor (2) is fastened, and
- electrical connections (9) which are used to electrically contact-connect the sensor (2) to lines of the conductor support (4),
- the conductor support (4) being obliquely oriented in the space,
- a wedge-shaped moulding (3), which has two essentially planar bearing faces (5, 6) which are opposite one another and enclose a wedge angle (α), being arranged between the sensor (2) and the conductor support (4),
- a second bearing face (6) bearing against the conductor support (4) and a first bearing face (5) bearing against a bearing region (8) of the sensor (2),
- the wedge angle (α) being selected in such a manner that a reference axis (7) of the sensor (2) essentially extends in the direction of gravitational acceleration (g) during zero measurement of the sensor,
- the sensor (2) having electrically conductive contacts (10, 11) which protrude in the bearing region (8), **characterized in that**
- the moulding (3) has recesses (15, 16) at the positions which are opposite the contacts (10, 11) during assembly, the contacts (10, 11) being able to be introduced into said recesses and said recesses continuously extending from the first bearing face (5) to the second bearing face (6), and **in that**
- an electrically conductive metal sleeve (17) which is electrically conductively connected to the contact (10) in the recess (15, 16) and to at least one line of the conductor support (4) is arranged at least in one of the recesses (15, 16).

2. Arrangement (1) according to Claim 1, **characterized in that** the sensor (2) is an angle measuring sensor.

3. Arrangement (1) according to at least one of the preceding claims, **characterized in that** the moulding (3) has at least one resilient latching hook (14) on the second bearing face (6), and the conductor support (4) has an opening (20) which corresponds to the latching hook (14), through which the latching hook (14) can be at least partially passed and to which the latching hook (14) can be latched.

4. Arrangement (1) according to at least one of the preceding claims, **characterized in that** the sensor (2) can be fitted to the moulding (3) using a resilient latching connection (13).

5. Arrangement (1) according to at least one of the preceding claims, **characterized in that** at least one contact (10, 11) is in the form of a cylindrical pin which is at least partially surrounded by the metal sleeve (17).

6. Arrangement (1) according to Claim 5, **characterized in that** the metal sleeve (17) is longer than the contact (10) and lengthens the longitudinal extent of the contact (10).

7. Arrangement (1) according to at least one of the preceding Claims 5 and 6, **characterized in that** the conductive metal sleeve (17) is a core end sleeve.

8. Arrangement (1) according to at least one of the preceding Claims 5 to 7, **characterized in that** the recesses (15, 16) are situated at positions of different wedge thickness of the wedge-shaped moulding (3), and a metal sleeve (17) which lengthens the contact (10) in the direction of the conductor support (4) is arranged in at least one recess (15, 16) whose longitudinal extent is longer than that of the contact (10) situated in it.

9. Arrangement (1) according to at least one of the preceding claims, **characterized in that** the moulding (3) is in the form of a plastic injection-moulded component.

## Revendications

1. Ensemble (1) comportant
- un capteur (2) permettant de mesurer une position, notamment une position angulaire, un déplacement ou une accélération,
- un support de conducteurs (4), sur lequel le capteur (2) est fixé, et
- des raccordements électriques (9), au moyen desquels le capteur (2) est mis en contact électrique avec des conducteurs du support de conducteurs (4), où
- le support de conducteurs (4) est orienté obliquement dans l'espace,
- entre le capteur (2) et le support de conducteurs (4), est disposée une pièce usinée en biseau (3) qui comporte deux surfaces d'appui (5, 6), essentiellement planes et se faisant face, en formant entre elles un angle en V (α), où
- une deuxième surface d'appui (6) est appliquée sur le support de conducteurs (4) et une première surface d'appui (5) est appliquée sur une zone d'appui (8) du capteur (2),
- l'angle en V (α) est choisi de telle manière qu'un axe de référence (7) du capteur (2) se trouve essentiellement dans la direction de l'accélération due à la gravité (g) lorsque le capteur donne la mesure zéro,
- le capteur (2) a des contacts électriques (10, 11) qui font saillie dans la zone d'appui (8),
**caractérisé par le fait**
- **que** la pièce usinée (3) comporte, aux positions qui sont, lors de l'assemblage, en face des contacts (10, 11), des évidements (15, 16), dans lesquels les contacts (10, 11) peuvent s'introduire et lesquels s'étendent d'une façon continue de la première surface d'appui (5) à la deuxième surface d'appui (6), et
- **que**, au moins dans l'un des évidements (15, 16), est placée une douille métallique (17) conduisant l'électricité, laquelle est en liaison électrique avec le contact (10) dans l'évidement (15, 16) et au moins un conducteur du support de conducteurs (4).

2. Ensemble (1) selon la revendication 1, **caractérisé par le fait que** le capteur (2) est un capteur de goniométrie.

3. Ensemble (1) selon au moins l'une des revendications précédentes, **caractérisé par le fait que** la pièce usinée (3) a au moins un crochet d'arrêt (14) élastique sur la deuxième surface d'appui (6) et que le support de conducteurs (4) a une ouverture (20) correspondant au crochet d'arrêt (14), à travers laquelle le crochet d'arrêt (14) peut, au moins partiellement, s'introduire et dans laquelle le crochet d'arrêt (14) peut s'encliqueter.

4. Ensemble (1) selon au moins l'une des revendications précédentes, **caractérisé par le fait que** le capteur (2) peut être fixé à la pièce usinée (3) au moyen d'un lien encliqueté élastique (13).

5. Ensemble (1) selon au moins l'une des revendications précédentes, **caractérisé par le fait que** au moins un contact (10, 11) est conçu sous la forme de broche cylindrique entourée au moins partiellement par la douille métallique (17).

6. Ensemble (1) selon la revendication 5, **caractérisé par le fait que** la douille métallique (17) est plus longue que le contact (10) et prolonge le contact (10) dans le sens de sa longueur.

7. Ensemble (1) selon au moins l'une des revendications précédentes 5 ou 6, **caractérisé par le fait que** la douille métallique conductrice (17) est un embout de terminaison de conducteur.

8. Ensemble (1) selon au moins l'une des revendications précédentes 5 à 7, **caractérisé par le fait que** les évidements (15, 16) se trouvent à des positions d'épaisseur différente de la pièce usinée en biseau (3) et que, dans au moins un évidement (15, 16), qui est plus long que le contact (10) qui s'y trouve, est placée une douille métallique (17) qui prolonge le contact (10) dans la direction du support de conducteurs (4).

9. Ensemble (1) selon au moins l'une des revendications précédentes, **caractérisé par le fait que** la pièce usinée (3) est conçue comme composant en matière plastique moulé par injection.
